# EUROPEAN PATENT SPECIFICATION

(11) **EP 3 242 055 B1**
(45) Date of publication and mention of the grant of the patent: **19.06.2019**
(21) Application number: 16168405.5
(22) Date of filing: 04.05.2016
(51) Int. Cl.: F16F 15/173, F16F 9/32, G01M 17/04

(54) **WEAR INDICATOR OF VIBRATION DAMPER**
VERSCHLEISSANZEIGER EINES SCHWINGUNGSDÄMPFERS
INDICATEUR D'USURE D'AMORTISSEUR DE VIBRATIONS

(43) Date of publication of application: 08.11.2017
(73) Proprietor: Caterpillar Energy Solutions GmbH, 68167 Mannheim (DE)
(72) Inventor: BERGER, Olaf, 67373 Dudenhofen (DE)
(74) Representative: BRP Renaud & Partner mbB Rechtsanwälte Patentanwälte Steuerberater

(56) References cited:
- EP-A1- 2 143 973
- DE-A1- 2 435 475
- DE-A1-102006 021 937

## Description

### Technical Field

The present disclosure generally relates to a vibration damper, and more particularly, to a vibration damper comprising a housing with a working chamber filled with a viscous dampening medium, and a wear indicator unit for indicating the wear state of the viscous dampening medium.

### Background

A variety of vibration dampers is known for dampening mechanical vibrations of vibrating devices. For example, torsional vibration dampers may be mounted between a crankshaft of an internal combustion engine and a drivetrain to dampen torsional vibrations generated by operating the internal combustion engine and transmitted via the crankshaft. As another example, torsional vibration dampers may be mounted at a free shaft end of a crankshaft. As yet another example, vibration dampers may be mounted between a base of a vibrating device, such as an internal combustion engine, and a foundation.

One type of vibration dampers is known as so-called visco-vibration dampers. Those visco-vibration dampers include a housing with a working chamber that is filled with a viscous dampening medium that effects at least a part of the dampening effect provided by the visco-vibration damper. During service life of the vibration damper, the viscosity of the viscous dampening medium changes and eventually becomes very viscous such that a
desired dampening effect of the vibration damper is no longer maintained. Therefore, monitoring a dampening effect of a vibration damper may be applied.

For example, DE 10 2006 021 937 A1 discloses a method for determining the wear condition of a vibration damper for use in motor vehicles. The method involves exposing a vibration damper to an excitation, and detecting a parameter representing a damping behavior of the damper. The parameter is compared with a reference value. The deviation between the parameter and the reference serves as measure for the wear condition of the vibration damper. An operating temperature of the damper is used as parameter for the wear condition based on the excitation of the damper.

As another example, US 8,275,515 B2 discloses an apparatus and method for determining shock-absorber wear. The device includes a shock absorber, a temperature sensor, and an electronics assembly. The temperature sensor may generate temperature data for the shock absorber. The electronics assembly may determine a condition of the shock absorber based on the temperature data. A condition of the shock absorber, such as a shock-wear value or a remaining useful life, is determined based on the temperature data by comparing a measured temperature value or an average of measured temperature values with reference values.

Alternatively, from DE 24 35 475 A1 and EP 2 143 973 A1, it is known to count the operation hours depending on the critical resonance speed or to measure the thermal load of the viscous fluid.

The present disclosure is directed, at least in part, to improving or overcoming one or more aspects of prior systems.

### Summary of the Disclosure

In one aspect, a vibration damper is disclosed. The vibration damper comprises a housing including a working chamber filled with a viscous dampening medium. The vibration damper further comprises a wear indicator unit configured to indicate a wear state of the viscous dampening medium by detection of a received thermal energy input related to the temperature of the viscous dampening medium over a time period.

In another aspect, a method for monitoring wear of a vibration damper with a housing including a working chamber filled with a viscous dampening medium is disclosed. The method comprises a step of receiving a thermal energy input associated with a temperature of the viscous dampening medium over a time period and detecting said thermal energy input related to the temperature of the viscous dampening medium over the period of time. The method further comprises a step of indicating a wear state of the viscous dampening medium based on the detected thermal energy input.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1A shows a cut view through a torsional vibration damper including a schematic representation of a wear indicator unit according to one embodiment of the present disclosure.
Fig. 1B shows an exemplary wear indicator unit as used in the embodiment shown in Fig. 1A.
Fig. 2 shows a cut view through a torsional vibration damper including a schematic representation of a wear indicator unit according to another embodiment of the present disclosure.
Fig. 3 shows a cut view through a vibration damper including a damper plunger and a schematic representation of a wear indicator unit according to another embodiment of the present disclosure.
Fig. 4 shows a cut view through a vibration damper including a damper plunger and a schematic representation of a wear indicator according to yet another embodiment of the present disclosure.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The present disclosure is based in part on the realization that monitoring a wear state of a viscous dampening medium in a vibration damper by means of measuring a temperature value of the damper or the viscous dampening medium and comparing the measured temperature value with a reference value or table may be less than optimal. The reason is that during service life of the viscous dampening medium, typically, a viscosity value of the viscous dampening medium initially decreases (the viscous dampening medium becomes less viscous and more flowable, respectively) and later on abruptly increases (the viscous dampening medium becomes more viscous and less flowable, respectively) shortly before the end of the service life. A working temperature of the viscous dampening medium depends on the viscosity of the viscous dampening medium. Accordingly, although a temperature measurement for the viscous dampening medium may indicate a desired temperature value (and thus, a desired viscosity for the viscous dampening medium), one does not know whether the viscous dampening medium is shortly before the end of the service life or not. As explained above, during the service life of the viscous dampening medium, the same takes at least two times the same viscosity value: a first time during a first main section of the service life, and a second time shortly before the end of the service life. Therefore, it may happen that one may unconsciously carry out a temperature measurement shortly before the end of the service life, which indicates a desired temperature and associated viscosity, and one may wrongly conclude that the end of the service life is a long time away.

The present disclosure is based in part on the realization that wear of a viscous dampening medium used in a vibration damper depends on a thermal energy input to the viscous dampening medium during service life. Stated differently, wear of a viscous dampening medium depends on an integral of a temperature value of the viscous dampening medium over a time period. Therefore, a wear indicator (or an indicator of a lifespan, respectively) of a vibration damper including the viscous dampening medium can be obtained by detecting a thermal energy input related to (associated with) a temperature of the viscous dampening medium over a time period.

The present disclosure is further based in part on the realization that the wear indicator can be configured using electronic devices and/or without using electronic devices. On the one hand, the wear indicator may include a temperature sensor for measuring a temperature value related to a temperature of the viscous dampening medium, and an evaluation unit integrating temperature values received from the temperature sensor and over a time period to obtain a thermal energy input value. On the other hand, the wear indicator may include an indicator element arranged in heat conducting relationship with the viscous dampening medium and configured to change a visible characteristic of the indicator element (such as a color or a quantity of the indicator element) over a time period based on an amount of thermal energy input received from the viscous dampening medium.

The present disclosure is further based in part on the realization that in case of providing a temperature sensor, the same may be provided as contactless temperature sensor disposed in a non-contacting relationship to the vibration damper, for example in a case in which a housing of the vibration damper is not stationary such as in the case of a torsional vibration damper.

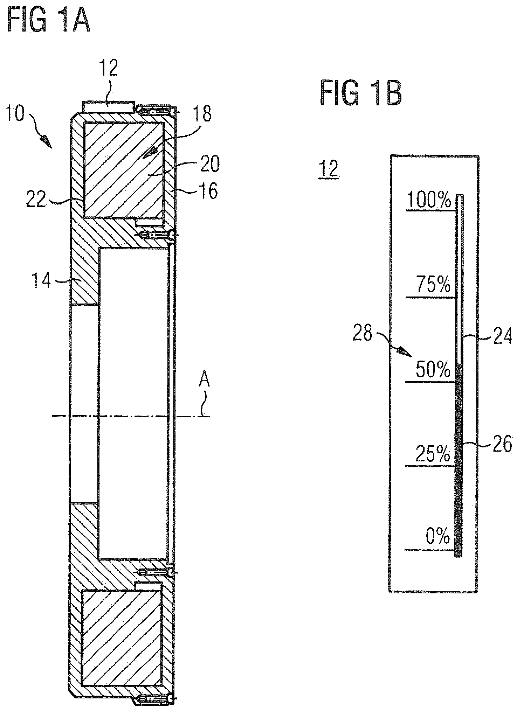

Referring to Figs. 1A and 1B, an embodiment of a torsional vibration damper 10 equipped with a wear indicator unit 12 is shown.

The torsional vibration damper 10 comprises the wear indicator unit 12, a housing 14, a cover 16, a working chamber 18, an inertia body 20, and a viscous dampening medium 22, for example silicone oil.

For example, the housing 14 of the torsional vibration damper 10 may be connected to a crankshaft of an internal combustion engine (not shown) for dampening torsional vibrations.

The housing 14 and the cover 16 mounted to an end face of the housing 14 together define the working chamber 18. The working chamber 18 is formed as a ring channel extending about a central axis A of the torsional vibration damper 10 and the housing 14. In some embodiments, the housing 14 and the cover 16 may be integrally formed. Furthermore, in some embodiments, the cover 16 and/or the housing 14 may comprise an interface port for supplying or discharging the viscous dampening medium 22 to and from the working chamber 18.

The working chamber 18 includes the annular inertia body 20 and the viscous dampening medium 22. Particularly, the viscous dampening medium 22 is provided in a so-called damper gap disposed between the inertia body 20 and an inner face of the working chamber 18. The inertia body 20 is movable within the working chamber 18 and the viscous dampening medium 22 about the central axis A. For facilitating rotary movement of the inertia body 20 within the working chamber 18 and the viscous dampening medium 22 slide bearings not shown in further detail may be provided.

During operation, the inertia body 20 moves relative to the housing 14, which is connected to the crankshaft in a rotatably fixed manner. Due to a relative movement of the inertia body 20 with respect to the housing 14, a vibration energy is drawn from the housing 14 and ultimately dissipated into thermal energy due to friction between the inertia body 20 and the viscous dampening medium 22.

In the shown embodiment, the wear indicator unit 12 is mounted to the housing 14. Specifically, the wear indicator unit 12 this mounted to an outer circumferential face of the housing 14. Alternatively, for example, the wear indicator unit 12 may be mounted to any other suitable position at or within the housing 14. The position may be chosen to ensure a heat transfer between the viscous dampening medium 22 within the working chamber 18 and the wear indicator unit 12. To this end, a heat conducting material may be provided between the wear indicator unit 12 and the working chamber 18. In the shown embodiment, the housing 14 is made of a heat conductive material, for example a steel alloy Furthermore, the mounting mechanism of the wear indicator unit 12 at or in the housing 14 may also ensure a heat transfer between the wear indicator unit 12 and the housing 14. For example, a heat-conducting paste may be provided between contacting faces of the wear indicator unit 12 and the housing 14. Still further, the position may be chosen to allow a good visibility of the wear indicator unit 12 by a service technician during service. For example, such a position may be situated at the outer circumferential face of the housing 14 as shown in Fig. 1.

Referring to Fig. 1B, an exemplary wear indicator unit 12 is shown. The wear indicator unit 12 is configured to indicate a wear state of the viscous dampening medium 22 based on a received thermal energy input associated with a temperature of the viscous dampening medium over a time period.

Specifically, in the shown embodiment, the wear indicator unit 12 includes an elongated and transparent fluid chamber 24. The fluid chamber 24 is filled with an indicator element 26. In the present embodiment, the indicator element 26 is an indicator liquid. The fluid chamber 24 is configured to allow evaporation of the indicator liquid therein. To this end, the fluid chamber 24 may include evaporation bores small enough to allow passing of a gaseous phase of the indicator liquid only.

A liquid level (fluid level) of the indicator liquid 26 indicates a wear state of the viscous dampening medium as a thermal energy input onto the indicator liquid 26 evaporates the indicator liquid 26. Since the wear indicator unit 12 and particularly the indicator liquid 26 are provided in a heat transfer relationship with the viscous dampening medium 22, the thermal energy input received by the indicator liquid 26 relates to a temperature development of the viscous dampening medium 22 over a time period.

As shown in Fig. 1B, a scale 28 may be provided to ease reading the wear indicator unit 12. For example, the scale 28 indicates various liquid levels as shown in Fig. 1B. Alternatively, the scale 28 may indicate any other useful information related to a remaining service life of the viscous dampening medium 22, for example remaining working hours. Depending on the evaporation characteristics of the indicator liquid 26, the scale may be a linear scale, a logarithmic scale etc.

During maintenance of the vibration damper 10, a service technician may check the scale 28. The scale 28 may indicate an oncoming end of the service life of the viscous dampening medium 22 by showing a low fluid level of the indicator fluid 26 within the indicator fluid chamber 24. The service technician thus concludes that the viscous dampening medium 22 has to be replaced and the indicator liquid 26 has to be refilled. Alternatively, the vibration damper 10 may be replaced as a whole.

In other embodiments, the indicator element of the wear indicator unit may be configured in any other fashion that ensures a change of a visible characteristic (shape, color, quantity etc.) of the indicator element depending on an amount of thermal energy input. The change of the visible characteristic of the indicator element may be permanent and, in some embodiments, reversible. For example, the indicator element may be a patch or a chamber filled with a liquid attached to the housing 14 to be visible from an outside of the housing 14. The patch or the liquid within the chamber may change a color depending on the amount of thermal energy input received.

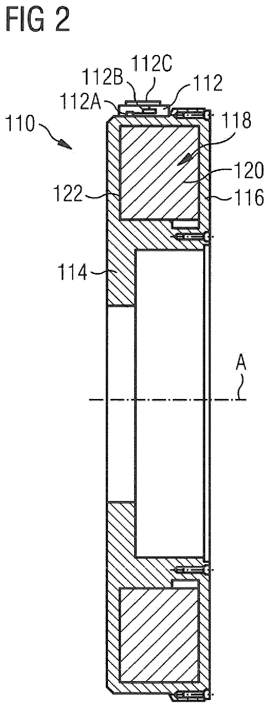

Referring to Fig. 2, another embodiment of a torsional vibration damper 110 equipped with a wear indicator unit 112 is shown.

The torsional vibration damper 110 is configured similar to the torsional vibration damper 10 shown in Fig. 1A which is indicated by similar reference signs in the one-hundred range, except for a different configuration of the wear indicator unit 112.

Here, the wear indicator unit 112 is configured as an electronic device comprising a temperature sensor 112A, an evaluation member 112B, and a display device 112C.

The temperature sensor 112A is configured to measure a temperature, and to output a signal indicative of the measured temperature. In the shown embodiment, the temperature sensor 112A is arranged at a back face of the wear indicator unit 112 to measure a temperature of the housing 114. In other embodiments, the temperature sensor 112A may be arranged at any other suitable position to measure a temperature related to a temperature of the viscous dampening medium 122. For example, the temperature sensor 112A may be arranged in the housing 114 to measure a temperature of the housing 114, and/or partly reaching into the damper gap of the working chamber 118 to directly measure a temperature of the viscous dampening medium 122 situated in the damper gap.

The evaluation member 112B is connected to the temperature sensor 112A and configured to receive the signal indicative of the measured temperature. The evaluation member 112B is configured to calculate a thermal energy input based on the signals received from the temperature sensor 112A. For example, the evaluation member 112B obtains a value for the thermal energy input by integrating a plurality of temperature values as indicated by the signals received from the temperature sensor 112A over a time period. The evaluation member 112B is further connected to the display device 112C for outputting signals related to a desired display on the display device 112C.

The display device 112C is configured to receive signals from the evaluation member 112B, and to display information related to the wear state of the viscous dampening medium 122. For example, the display device 112C display remaining working hours of the viscous dampening medium 122, or an amount of thermal energy input received by the temperature sensor 112A.

In some embodiments, the wear indicator unit 112 may be at least partially disposed remote from the vibration damper 110. For example, the temperature sensor 112A of the wear indicator unit 112 may be configured as a contactless temperature sensor, particularly an infrared temperature sensor, arranged spaced apart from the vibration damper 110. The contactless temperature sensor may be directed to an outer face of the housing 114 to measure a temperature of the housing 114. Those embodiments facilitate a reliable and easy measurement during operation, and an evaluation thereof in a remote environment, particularly in case the vibration damper is not stationary as it is the case for torsional vibration dampers, which rotate about the central axis A during operation of the internal combustion engine (not shown).

In some embodiments, the wear indicator unit 112 may be connected to or integrated with a control unit of the vibrating system (not shown) connected to the vibration damper 110. Those embodiments may allow a processing of the signals output from the evaluation member 112B for control purposes of the vibrating system.

In some embodiments, display device 112C may be omitted, and any other means may be provided to indicate or process a wear state of the viscous dampening medium 122.

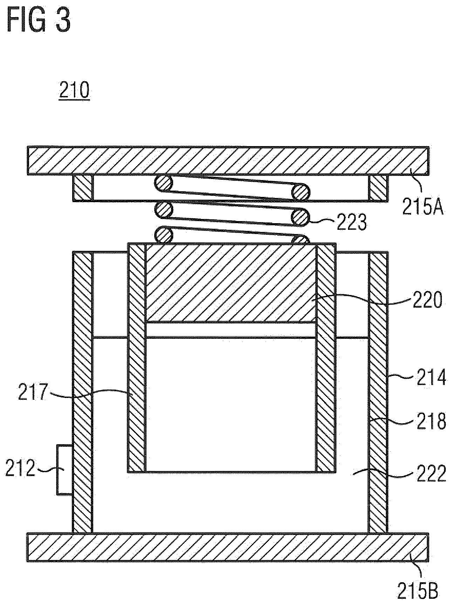

Referring to Fig. 3, another embodiment of a vibration damper 210 equipped with a wear indicator unit 212 is depicted.

The vibration damper 210 has a different structure compared to vibration dampers 10 and 110 shown in Figs. 1A and 2. Specifically, the vibration damper 210 includes the wear indicator unit 212, a housing 214, a first mounting plate 215A, a second mounting plate 215B, a working chamber 218, a damper plunger 217, an inertia body 220, and a viscous dampening medium 222. The vibration damper 210 may further include a spring 223 as depicted in Fig. 3.

The first mounting plate 215A is mounted to a vibrating device (not shown), for example, a base of an internal combustion engine. The second mounting plate 215B is fastened to a foundation. The damper plunger 217 immerses into the viscous dampening medium 222.

Similar to the dampening effect provided by the torsional vibration dampers 10 and 110 (see Figs. 1A and 2), the dampening effect is obtained by drawing a vibration energy input from the vibrating device via the second mounting plate 215B and ultimately dissipating the same into thermal energy due to friction between the damper plunger 217 and the viscous dampening medium 222. The effect is enhanced by the presence of the inertia body 220.

Furthermore, similar to the configuration described with reference to Figs. 1A and 1B, the wear indicator unit 212 is disposed in heat conducting relationship with the viscous dampening medium 222 via a heat-conductive portion of the housing 214. With respect to specific configurations of the wear indicator unit 212 it is referred to the explanations given with respect to wear indicator unit 12.

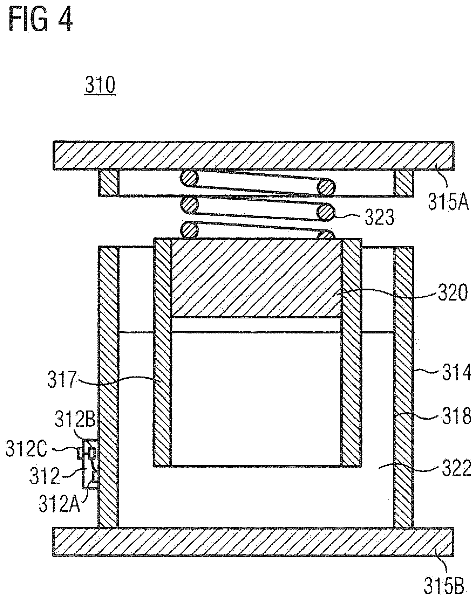

Referring to Fig. 4, yet another embodiment of a vibration damper 310 equipped with a wear indicator unit 312 is depicted. The vibration damper 310 is configured similar to the vibration damper 210 shown in Fig. 3 which is indicated by similar reference signs in the three-hundred range, except for a different configuration of the wear indicator unit 312.

Here, similar to wear indicator unit 112 of the embodiment shown in Fig. 2, the wear indicator unit 312 is configured as an electronic device including a temperature sensor 312A, an evaluation member 312B, and a display device 312C. With respect to specific configurations of the wear indicator unit 312 it is referred to the explanations given with respect to the wear indicator unit 112.

As one skilled in the art will appreciate, features of the embodiments shown in Figs. 1A, 1B, 2, 3, 4, respectively, may be at least partially combined in other embodiments.

Furthermore, as one skilled in the art will appreciate, the temperature of the viscous dampening medium mainly depends on heat generated during operation of the vibration damper, but also depends on an ambient temperature during operation and non-operation of the vibration damper. In very hot or very cold environments, the influence of the ambient temperature may be significant, as the case may be also during non-operation of the vibration damper (non-operation of the vibrating system such as an engine). The wear indicator units 12, 222 allow to consider the ambient temperature during operation and non-operation of the vibration damper 10, 210. The wear indicator units 112, 322 allow to selectively consider the ambient temperature during operation and non-operation of the vibration damper 10, 210, depending on respective times of the integrated temperature values.

### Industrial Applicability

The wear indicator unit as disclosed herein is applicable for monitoring a wear state of a vibration damper including a viscous dampening medium (in other words, a visco-vibration damper), for example a visco-torsional damper or a visco-plunger damper.

The present disclosure further relates to a method for monitoring wear of a visco-vibration damper which can be carried out by the wear indicator unit as disclosed herein.

The method comprises a step of receiving (obtaining) a thermal energy input related to a temperature of the viscous dampening medium 22, 122, 222, 322 over a time period. With reference to the embodiments shown in Figs. 1A, 1B, and 3, this step may include a step of conducting a thermal energy from the viscous dampening medium 22, 222 to the indicator element 26 of the wear indicator unit 12, 212. The thermal energy may be conducted via a heat-conducting material disposed between the indicator element 26 and the viscous dampening medium. The heat-conducting material may form part of the housing 14, 214. Alternatively or additionally, with respect to the embodiments shown in Figs. 2 and 4, the step of obtaining a thermal energy input may include a step of integrating a plurality of measured temperature values related to a temperature of the viscous dampening medium over a time period. The temperature values may be measured by a temperature sensor 112A, 312A, and transmitted to the evaluation member 112B, 312B for integrating the values to calculate the thermal energy input.

The method may then proceed to a step of indicating a wear state of the viscous dampening medium 22, 122, 222, 322 based on the received thermal energy input. With reference to the embodiments shown in Figs. 1A, 1B, and 3, this step may include a step of exposing the indicator element 26 to the thermal energy to affect a change of a visible characteristic of the indicator element depending on the amount of thermal energy input received. Alternatively or additionally, with respect to the embodiments shown in Figs. 2 and 4, the step of indicating a wear state includes a step of displaying a value related to the thermal energy input obtained by integrating the plurality of temperature values over a time period. The value may be displayed by the display device 112C, 312C.

Terms such as "about", "around", "approximately", or "substantially" as used herein when referring to a measurable value such as a parameter, an amount, a temporal duration, and the like, is meant to encompass variations of ±10% or less, preferably ±5% or less, more preferably ±1 % or less, and still more preferably ±0.1% or less of and from the specified value, insofar as such variations are appropriate to perform in the disclosed invention. It is to be understood that the value to which the modifier "about" refers is itself also specifically, and preferably, disclosed. The recitation of numerical ranges by endpoints includes all numbers and fractions subsumed within the respective ranges, as well as the recited endpoints.

Although the preferred embodiments of this invention have been described herein, improvements and modifications may be incorporated without departing from the scope of the following claims.

## Claims

1. A vibration damper (10, 110, 210, 310), comprising:
a housing (14, 114, 214, 314) including a working chamber (18, 118, 218, 318) filled with a viscous dampening medium (22, 122, 222, 322);
**characterised in that** the vibration damper comprises
a wear indicator unit (12, 112, 212, 312) configured to indicate a wear state of the viscous dampening medium (22, 122, 222, 322) by detection of a received thermal energy input related to the temperature of the viscous dampening medium (22, 122, 222, 322) over a time period.

2. The vibration damper (10, 210) of claim 1, wherein the wear indicator unit (12, 212) includes an indicator element (26) arranged in heat conducting relationship with the viscous dampening medium (22, 222).

3. The vibration damper (10, 210) of claim 2, wherein the indicator element (26) is configured to change a visible characteristic of the indicator element (26) over a time period based on an amount of the received thermal energy input.

4. The vibration damper (10, 210) of claim 2 or claim 3, wherein the indicator element (26) is an indicator liquid accommodated in a fluid chamber (24) and evaporating over a time period based on the amount of the received thermal energy input, and a wear state of the viscous dampening medium (22, 222) is indicated by a fluid level of the indicator liquid within the fluid chamber (24).

5. The vibration damper (10, 110, 210, 310) of any one of claim 2 to 4, wherein the indicator element (26) is disposed to be visible from an outside of the housing (14, 114, 214, 314).

6. The vibration damper (110, 310) of any one of the preceding claims, further comprising a temperature sensor (112A, 312A) arranged to provide a signal indicative of a temperature value related to a temperature of the viscous dampening medium (122, 322).

7. The vibration damper (110, 310) of claim 6, wherein the wear indicator unit (112, 312) comprises an evaluation member (112B, 312B) connected to the temperature sensor (112A, 312A) to receive signals from the temperature sensor (112A, 312A), and the evaluation member (112B, 312B) is configured to obtain the thermal energy input by integrating a plurality of temperature values over the time period indicated by the signals received from the temperature sensor (112A, 312A).

8. The vibration damper (110, 310) of claim 6 or claim 7, wherein the temperature sensor (112A, 312A) is a contactless temperature sensor, particularly an infrared temperature sensor, arranged outside of the housing (114, 314).

9. The vibration damper (110, 310) of any one of claims 6 to 8, wherein the temperature sensor (112A, 312A) is arranged in or at the housing (114,314).

10. The vibration damper (10, 110) of any one of the preceding claims, wherein the vibration damper (10, 110) is a torsional vibration damper.

11. The vibration damper (210, 310) of any one of claims 1 to 9, wherein the vibration damper (210, 310) includes a damper plunger (217, 317) arranged to immerse into the viscous dampening medium (222, 322) within the working chamber (218, 318).

12. The vibration damper (110, 310) of any one of the preceding claims, wherein the wear indicator unit (112, 312)) comprises a display device (112C, 312C) configured to display a value related to the thermal energy input.

13. A method for monitoring wear of a vibration damper (10, 110, 210, 310) with a housing (14, 114, 214, 314) including a working chamber (18, 118, 218, 318) filled with a viscous dampening medium (22, 122, 222, 322), **characterized by**:
a step of receiving a thermal energy input related to a temperature of the viscous dampening medium (22, 122, 222, 322) over a time period;
a step of detecting said thermal energy input related to the temperature of the viscous dampening medium (22, 122, 222, 322) over the period of time; and
a step of indicating a wear state of the viscous dampening medium (22, 122, 222, 322) based on the detected thermal energy input.

14. The method of claim 13, wherein:
the step of receiving a thermal energy input includes a step of conducting a thermal energy from the viscous dampening medium (22, 222) to an indicator element (26); and
the step of indicating a wear state includes:
a step of exposing the indicator element (26) to the thermal energy; and
a step of changing a visible characteristic of the indicator element (26) depending on an amount of the thermal energy.

15. The method of claim 13 or claim 14, wherein:
the step of receiving a thermal energy input includes:
a step of measuring a plurality of temperature values related to a temperature of the viscous dampening medium (122, 322) over a time period; and
a step of integrating the plurality of measured temperature values over a time period; and
the step of indicating a wear state includes a step of displaying a value related to the thermal energy input obtained by integrating the plurality of temperature values over the time period.

## Patentansprüche

1. Schwingungsdämpfer (10, 110, 210, 310), umfassend:
ein Gehäuse (14, 114, 214, 314) mit einer Arbeitskammer (18, 118, 218, 318), die mit einem viskosen Dämpfungsmedium (22,122, 222, 322) gefüllt ist;
**dadurch gekennzeichnet, dass** der Schwingungsdämpfer umfasst
eine Verschleißanzeigeeinheit (12, 112, 212, 312), die dazu ausgebildet ist, einen Verschleißzustand des viskosen Dämpfungsmediums (22, 122, 222, 322) durch Erfassen einer empfangenen Wärmeenergieeingabe in Bezug auf die Temperatur des viskosen Dämpfungsmediums (22, 122, 222, 322) über einen Zeitraum anzuzeigen.

2. Schwingungsdämpfer (10, 210) nach Anspruch 1, wobei die Verschleißanzeigeeinheit (12, 212) ein Anzeigeelement (26) einschließt, das in Wärmeleitbeziehung mit dem viskosen Dämpfungsmedium (22, 222) angeordnet ist.

3. Schwingungsdämpfer (10, 210) nach Anspruch 2, wobei das Anzeigeelement (26) dazu ausgebildet ist, eine sichtbare Eigenschaft des Anzeigeelements (26) über einen Zeitraum basierend auf einer Menge der empfangenen Wärmeenergieeingabe zu ändern.

4. Schwingungsdämpfer (10, 210) nach Anspruch 2 oder Anspruch 3, wobei das Anzeigeelement (26) eine Anzeigeflüssigkeit ist, die in einer Fluidkammer (24) aufgenommen ist und über einen Zeitraum basierend auf der Menge der empfangenen Wärmeenergieeingabe verdampft, und ein Verschleißzustand des viskosen Dämpfungsmediums (22, 222) durch einen Fluidpegel der Anzeigeflüssigkeit innerhalb der Fluidkammer (24) angezeigt wird.

5. Schwingungsdämpfer (10, 110, 210, 310) nach einem der Ansprüche 2 bis 4, wobei das Anzeigeelement (26) so angeordnet ist, dass es von außerhalb des Gehäuses (14, 114, 214, 314) sichtbar ist.

6. Schwingungsdämpfer (110, 310) nach einem der vorstehenden Ansprüche, ferner umfassend einen Temperatursensor (112A, 312A), der dazu angeordnet ist, ein Signal bereitzustellen, das auf einen Temperaturwert hinweist, der sich auf eine Temperatur des viskosen Dämpfungsmediums (122, 322) bezieht.

7. Schwingungsdämpfer (110, 310) nach Anspruch 6, wobei die Verschleißanzeigeeinheit (112, 312) ein Beurteilungselement (112B, 312B) umfasst, das mit dem Temperatursensor (112A, 312A) verbunden ist, um Signale von dem Temperatursensor (112A, 312A) zu empfangen, und das Beurteilungselement (112B, 312B) dazu ausgebildet ist, die Wärmeenergieeingabe durch Integrieren einer Vielzahl von Temperaturwerten, die durch die von dem Temperatursensor (112A, 312A) empfangenen Signale angezeigt werden, über den Zeitraum zu ermitteln.

8. Schwingungsdämpfer (110, 310) nach Anspruch 6 oder Anspruch 7, wobei der Temperatursensor (112A, 312A) ein außerhalb des Gehäuses (114, 314) angeordneter, berührungsloser Temperatursensor, insbesondere ein Infrarot-Temperatursensor, ist.

9. Schwingungsdämpfer (110, 310) nach einem der Ansprüche 6 bis 8, wobei der Temperatursensor (112A, 312A) im oder am Gehäuse (114, 314) angeordnet ist.

10. Schwingungsdämpfer (10, 110) nach einem der vorstehenden Ansprüche, wobei der Schwingungsdämpfer (10, 110) ein Torsionsschwingungsdämpfer ist.

11. Schwingungsdämpfer (210, 310) nach einem der Ansprüche 1 bis 9, wobei der Schwingungsdämpfer (210, 310) einen Dämpfungskolben (217, 317) einschließt, der zum Eintauchen in das viskose Dämpfungsmedium (222, 322) innerhalb der Arbeitskammer (218, 318) angeordnet ist.

12. Schwingungsdämpfer (110, 310) nach einem der vorstehenden Ansprüche, wobei die Verschleißanzeigeeinheit (112, 312) eine Anzeigevorrichtung (112C, 312C) umfasst, die dazu ausgebildet ist, einen Wert anzuzeigen, der mit der Wärmeenergieeingabe in Beziehung steht.

13. Verfahren zum Überwachen des Verschleißes eines Schwingungsdämpfers (10, 110, 210, 310) mit einem Gehäuse (14, 114, 214, 314), das eine Arbeitskammer (18, 118, 218, 318) einschließt, die mit einem viskosen Dämpfungsmedium (22, 122, 222, 322) gefüllt ist, **gekennzeichnet durch:**
einen Schritt des Empfangens einer Wärmeenergieeingabe in Bezug auf eine Temperatur des viskosen Dämpfungsmediums (22, 122, 222, 322) über einen Zeitraum;
einen Schritt des Erfassens der Wärmeenergieeingabe in Bezug auf die Temperatur des viskosen Dämpfungsmediums (22, 122, 222, 322) über den Zeitraum; und
einen Schritt des Anzeigens eines Verschleißzustandes des viskosen Dämpfungsmediums (22, 122, 222, 322) basierend auf der erfassten Wärmeenergieeingabe.

14. Verfahren nach Anspruch 13, wobei:
der Schritt des Empfangens einer Wärmeenergieeingabe einen Schritt des Leitens einer Wärmeenergie von dem viskosen Dämpfungsmedium (22, 222) zu einem Anzeigeelement (26) einschließt; und
der Schritt des Anzeigens eines Verschleißzustandes einschließt:
einen Schritt des Aussetzens des Anzeigeelements (26) gegenüber der Wärmeenergie; und
einen Schritt des Änderns einer sichtbaren Eigenschaft des Anzeigeelements (26) in Abhängigkeit von einer Menge der Wärmeenergie.

15. Verfahren nach Anspruch 13 oder Anspruch 14, wobei: der Schritt des Empfangens einer Wärmeenergieeingabe einschließt:
einen Schritt des Messens einer Vielzahl von Temperaturwerten, die sich auf eine Temperatur des viskosen Dämpfungsmediums (122, 322) über einen Zeitraum beziehen; und
einen Schritt des Integrierens der Vielzahl von gemessenen Temperaturwerten über einen Zeitraum; und
wobei der Schritt des Anzeigens eines Verschleißzustandes einen Schritt des Anzeigens eines Werts einschließt, der sich auf die Wärmeenergieeingabe bezieht, der durch Integrieren der Vielzahl von Temperaturwerten über den Zeitraum ermittelt wird.

## Revendications

1. Amortisseur de vibrations (10, 110, 210, 310), comprenant :
un logement (14, 114, 214, 314) incluant une chambre de travail (18, 118, 218, 318) remplie d'un milieu visqueux d'amortissement (22,122, 222, 322) ;
**caractérisé en ce que** l'amortisseur de vibrations comprend
une unité indicatrice d'usure (12, 112, 212, 312) configurée pour indiquer un état d'usure du milieu visqueux d'amortissement (22, 122, 222, 322) par la détection d'un apport d'énergie thermique reçu se rapportant à la température du milieu visqueux d'amortissement (22, 122, 222, 322) sur une période de temps.

2. Amortisseur de vibrations (10, 210) selon la revendication 1, dans lequel l'unité indicatrice d'usure (12, 212) inclut un élément indicateur (26) agencé en relation thermoconductrice avec le milieu visqueux d'amortissement (22, 222).

3. Amortisseur de vibrations (10, 210) selon la revendication 2, dans lequel l'élément indicateur (26) est configuré pour changer une caractéristique visible de l'élément indicateur (26) sur une période de temps sur la base d'une quantité de l'apport d'énergie thermique reçu.

4. Amortisseur de vibrations (10, 210) selon la revendication 2 ou la revendication 3, dans lequel l'élément indicateur (26) est un liquide indicateur disposé dans une chambre à fluide (24) et s'évaporant sur une période de temps sur la base de la quantité de l'apport d'énergie thermique reçu, et un état d'usure du milieu visqueux d'amortissement (22, 222) est indiqué par un niveau de fluide du liquide indicateur au sein de la chambre à fluide (24).

5. Amortisseur de vibrations (10, 110, 210, 310) selon l'une quelconque parmi la revendication 2 à 4, dans lequel l'élément indicateur (26) est disposé pour être visible depuis l'extérieur du logement (14, 114, 214, 314).

6. Amortisseur de vibrations (110, 310) selon l'une quelconque des revendications précédentes, comprenant en outre un capteur de température (112A, 312A) agencé pour fournir un signal indicatif d'une valeur de température se rapportant à une température du milieu visqueux d'amortissement (122, 322).

7. Amortisseur de vibrations (110, 310) selon la revendication 6, dans lequel l'unité indicatrice d'usure (112, 312) comprend un élément d'évaluation (112B, 312B) connecté au capteur de température (112A, 312A) pour recevoir des signaux depuis le capteur de température (112A, 312A), et l'élément d'évaluation (112B, 312B) est configuré pour obtenir l'apport d'énergie thermique par intégration d'une pluralité de valeurs de température sur la période de temps indiquée par les signaux reçus du capteur de température (112A, 312A).

8. Amortisseur de vibrations (110, 310) selon la revendication 6 ou la revendication 7, dans lequel le capteur de température (112A, 312A) est un capteur de température sans contact, en particulier un capteur de température à infrarouge, agencé à l'extérieur du logement (114, 314).

9. Amortisseur de vibrations (110, 310) selon l'une quelconque des revendications 6 à 8, dans lequel le capteur de température (112A, 312A) est agencé dans ou au niveau du logement (114, 314).

10. Amortisseur de vibrations (10, 110) selon l'une quelconque des revendications précédentes, dans lequel l'amortisseur de vibrations (10, 110) est un amortisseur de vibrations de torsion.

11. Amortisseur de vibrations (210, 310) selon l'une quelconque des revendications 1 à 9, dans lequel l'amortisseur de vibrations (210, 310) inclut un piston d'amortisseur (217, 317) agencé pour s'immerger dans le milieu visqueux d'amortissement (222, 322) au sein de la chambre de travail (218, 318).

12. Amortisseur de vibrations (110, 310) selon l'une quelconque des revendications précédentes, dans lequel l'unité indicatrice d'usure (112, 312)) comprend un dispositif d'affichage (112C, 312C) configuré pour afficher une valeur se rapportant à l'apport d'énergie thermique.

13. Procédé de surveillance d'usure d'un amortisseur de vibrations (10, 110, 210, 310) avec un logement (14, 114, 214, 314) incluant une chambre de travail (18, 118, 218, 318) remplie d'un milieu visqueux d'amortissement (22, 122, 222, 322), **caractérisé par** :
une étape de réception d'un apport d'énergie thermique se rapportant à une température du milieu visqueux d'amortissement (22, 122, 222, 322) sur une période de temps ;
une étape de détection dudit apport d'énergie thermique se rapportant à la température du milieu visqueux d'amortissement (22, 122, 222, 322) sur la période de temps ; et
une étape d'indication d'un état d'usure du milieu visqueux d'amortissement (22, 122, 222, 322) sur la base de l'apport d'énergie thermique détecté.

14. Procédé selon la revendication 13, dans lequel :
l'étape de réception d'un apport d'énergie thermique inclut une étape consistant à conduire une énergie thermique depuis le milieu visqueux d'amortissement (22, 222) jusqu'à un élément indicateur (26) ; et
l'étape d'indication d'un état d'usure inclut :
une étape consistant à exposer l'élément indicateur (26) à l'énergie thermique ; et
une étape consistant à changer une caractéristique visible de l'élément indicateur (26) en fonction d'une quantité de l'énergie thermique.

15. Procédé selon la revendication 13 ou la revendication 14, dans lequel :
l'étape de réception d'un apport d'énergie thermique inclut :
une étape de mesure d'une pluralité de valeurs de température se rapportant à une température du milieu visqueux d'amortissement (122, 322) sur une période de temps ; et
une étape d'intégration de la pluralité de valeurs de température mesurées sur une période de temps ; et
l'étape d'indication d'un état d'usure inclut une étape d'affichage d'une valeur se rapportant à l'apport d'énergie thermique obtenu par intégration de la pluralité de valeurs de température sur la période de temps.
